# EUROPÄISCHE PATENTANMELDUNG

(11) **EP 4 641 167 A1**
(43) Veröffentlichungstag der Anmeldung: **29.10.2025**
(21) Anmeldenummer: 25171284.0
(22) Anmeldetag: 17.04.2025
(51) Int. Cl.: G01N 1/40, G01N 15/06, G01N 15/00

(54) **VERFAHREN ZUM IMMOBILISIEREN VON PARTIKELN**

(30) Priorität: 23.04.2024 DE 102024203767
(71) Anmelder: Leibniz-Institut für Polymerforschung Dresden e.V., 01069 Dresden (DE)
(72) Erfinder: Lenz, Robin, 01108 Dresden (DE); Enders, Kristina, 01108 Dresden (DE); Fischer, Dieter, 01326 Dresden (DE)
(74) Vertreter: Pfenning, Meinig & Partner mbB

(57) **Zusammenfassung**

Die vorliegende Erfindung betrifft ein Verfahren zum Immobilisieren von Partikeln auf einem als Filter dienendem Substrat während einer Filtration, bei dem das Substrat von einem die Partikel und ein anorganisches Haftmittel enthaltenden Fluid durchströmt wird (S100), wobei das Haftmittel auf das Substrat aufgebracht wird und die Partikel auf dem mit dem Haftmittel versehenen Substrat durch das Haftmittel immobilisiert werden (S101).

## Beschreibung

Die vorliegende Erfindung betrifft ein Verfahren zum Immobilisieren von Partikeln.

Bei Vergleichsmessungen wie Ringversuchen (interlaboratory comparisons, ILC), bei denen in mehreren Laboren als Teilnehmern an dem Ringversuch zwar jedes Labor eine eigene Probe zum Analysieren erhält, alle diese Proben jedoch parallel durch einen einzigen Probenherstellungsprozess hergestellt wurden, ist eine vergleichbare und zuverlässige Quantifizierung der in den Proben vorhandenen Partikeln, beispielsweise Mikroplastikpartikeln, die dann auf Filter abgeschieden werden, entscheidend. Hierfür müssen die entsprechenden Partikel zuverlässig und dauerhaft abgeschieden werden können. Aus dem Stand der Technik sind hierfür zwar Lösungen bekannt, bei denen aber die Partikel nicht ausreichend oder dauerhaft haften.

Der vorliegenden Erfindung liegt daher die Aufgabe zugrunde, ein Verfahren vorzuschlagen, mit dem Partikel zuverlässig auf einem Substrat immobilisiert werden.

Diese Aufgabe wird erfindungsgemäß gelöst durch ein Verfahren nach Anspruch 1. Vorteilhafte Ausgestaltungen und Weiterbildungen sind in den abhängigen Ansprüchen enthalten.

Bei einem Verfahren zum Immobilisieren von Partikeln auf einem als Filter dienenden Substrat während einer Filtration wird das Substrat von einem die Partikel wie auch ein anorganisches Haftmittel enthaltenden Fluid durchströmt, wobei die Partikel auf dem mit dem Haftmittelversehenen Substrat durch das Haftmittel immobilisiert werden. Das Fluid enthält somit die aufzubringenden Partikel sowie das Haftmittel und beim Durchströmen des Filters, also der Filtration, wird das Haftmittel auf das Substrat aufgebracht und zeitgleich die Partikel auf dem mit dem Haftmittel versehenen Substrat durch das Haftmittel immobilisiert und dauerhaft fixiert. Dabei wird nach dem Aufbringen in der Regel ein Aushärten bzw. Trocknen erfolgen, bei dem das Fluid entfernt wird.

Durch den Einsatz eines anorganischen Haftmittels wird eine permanente Fixierung der Partikel auf dem Substrat ermöglicht. Bei Einsatz eines so angefertigten Substrats als Präparat in spektroskopischen Analysen wie beispielsweise Raman-Spektroskopie oder Fourier-Transform-Infrarot-Spektroskopie (FTIR) treten keine störenden Signale (spektrale Banden) des Haftmittels auf, wie es beim Einsatz eines organischen Haftmittels der Fall wäre. Durch die erreichte Robustheit der Immobilisierung wird es möglich, dass bei sogenannten "Ringversuchen" oder "interlaboratory comparisons" alle Teilnehmer der Reihe nach dasselbe Substrat und somit dieselbe Probe vermessen. Dies weist insbesondere den Vorteil auf, dass unerwünschte Fehler aufgrund der Vervielfältigung einer zu vermessenden Probe vermieden werden und die erhaltene Varianz der Resultate genauer die eigentliche analytische Fehlergröße unter allen Teilnehmern zeigt. Das Substrat kann hierbei zur Kalibrierung der Analyseverfahren sowie zur Probenarchivierung genutzt werden. Außerdem ist es möglich, das Substrat zur korrelativen Mikroskopie oder als Referenzprobe zu verwenden.

Insbesondere kann das Verfahren als Vakuumfiltration ausgeführt sein, um möglichst wenig Haftmittelrückstände auf dem Substrat zurückzulassen.

Es kann vorgesehen sein, dass die Partikel als Mikroplastikpartikel oder andere mikropartikuläre Feststoffe ausgebildet sind. Insbesondere sollen Flugaschepartikel, Zementstaubpartikel, Rußpartikel oder Sporen als mikropartikuläre Feststoffe verstanden werden.

Die Partikel können einen Durchmesser von maximal 100 µm, vorzugsweise von 1 µm bis maximal 100 µm, besonders vorzugsweise von 10 µm bis maximal 70 µm aufweisen.

Das Substrat kann ein für Mikroskopie oder Spektroskopie geeignetes Substrat sein. Das Substrat kann als ein Siliziumwafer mit definierten Löchern bzw. als ein poröser Siliziumwafer ausgebildet sein. Es ist auch möglich, als Substrat eine Aluminiumoxidmembran, einen mit Gold oder mit Aluminium beschichteten Polycarbonatfilter, einen goldbeschichteten Siliziumfilter oder einen Polytetrafluorethylen-Filter (PTFE-Filter) zu verwenden.

Es kann vorgesehen sein, dass der Siliziumwafer mit einer Porengröße von maximal 20 µm, vorzugsweise 10 µm (also beispielsweise mit einer Porengröße von 2,5 µm oder 1 µm, typischerweise sollte eine Porengröße von 0,2 µm nicht unterschritten werden) ausgebildet ist.

Die Aluminiumoxidmembran kann mit einer Porengröße von minimal 0,2 µm ausgebildet sein. Die maximale Porengröße kann wiederum 10 µm betragen.

Das Haftmittel kann eine wasserfest aushärtende Silikatlösung, vorzugsweise Natriumsilikatlösung, Lithiumsilikatlösung, oder Kaliumsilikatlösung, sein. Typischerweise zeigen die geringen Haftmittelrückstände, die aufgrund des Verfahrens nur in sehr geringen Mengen auf bzw. in den angefertigten Präparaten verbleiben, kein oder nur ein sehr schwach messbares Schwingungsspektrum (bei Infrarotspektroskopie oder Raman-Spektroskopie) und auch kein Fluoreszenzsignal, um bei entsprechenden Messungen das Messergebnis nicht oder nur unwesentlich zu beeinflussen.

Eine Konzentration der Silikatlösung kann 1 Prozent bis 30 Prozent, vorzugsweise 10 Prozent, betragen.

Ein Substrat, das mit einem Verfahren mit den beschriebenen Eigenschaften mit immobilisierten Partikeln versehen ist, kann als Referenzprobe zum Ermitteln einer Leistungsfähigkeit eines oder mehrerer spektroskopischer Mikroskope oder Fluoreszenzmikroskope, als Referenzfilter für die spektroskopischen Mikroskope oder Fluoreszenzmikroskope und/oder als Referenzprobe zum Durchführen eines Ringversuchs verwendet werden.

Mindestens eine Markierung oder eine markierte Fläche kann durch Lasergravur auf das Substrat eingebracht werden, um einen Zielbereich zum spektroskopischen Vermessen zu kennzeichnen.

Ein Filter kann ein beschichtetes Substrat mit darin eingebetteten Partikeln aufweisen und mit einem Verfahren mit den beschriebenen Eigenschaften hergestellt bzw. beschichtet worden sein.

Ausführungsbeispiele der Erfindung sind in den Zeichnungen dargestellt und werden nachfolgend erläutert. Es zeigen:
Fig. 1 ein schematisches Ablaufdiagramm eines Verfahrens zum Immobilisieren von Partikeln und schematische Querschnitts-Detailansicht der auf dem Substrat immobilisierten Partikel.
Fig. 2 Aufnahmen von Substraten mit abgeschiedenen, immobilisierten Partikeln.

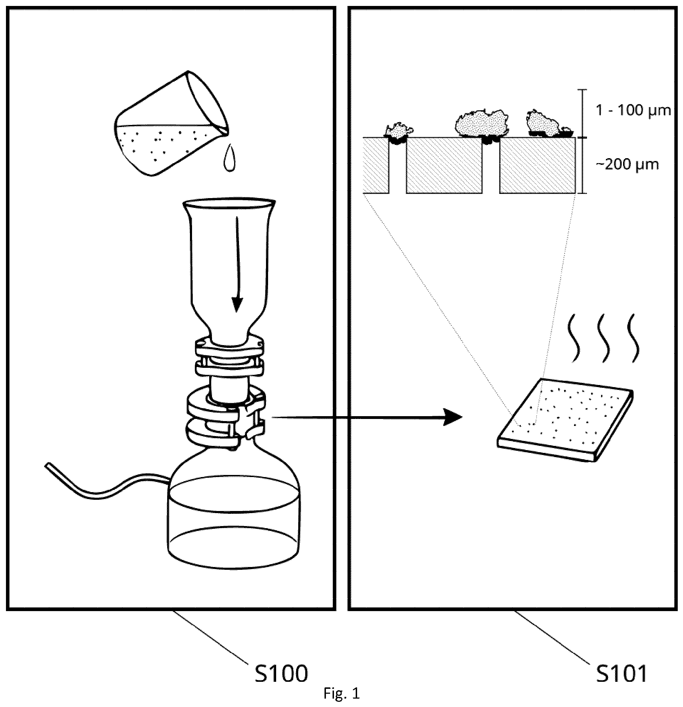

Figur 1 zeigt in einer schematischen Darstellung ein Ablaufschema eines Verfahrens zum Immobiliseren von Partikeln. Ein Substrat wird von einem die Partikel und ein anorganisches Haftmittel enthaltenden Fluid durchströmt. Bei diesem Durchströmungsschritt S100 werden Partikel auf dem Substrat abgeschieden und durch die nachfolgende Aushärtung S101 des Haftmittels, das auch als Klebemittel bezeichnet werden kann, immobilisiert und dauerhaft darauf fixiert. Dies ist in Figur 1 im Schritt S101 dargestellt, wobei nach dem Aushärten auf dem 200 µm dicken Substrat die bis zu 100 µm im Durchmesser aufweisenden Partikel fixiert sind.

Als Substrate können hierzu Filtermedien wie beispielsweise poröse Siliziumwafer, Aluminiumoxidmembranen, mit Gold oder mit Aluminium beschichteten Polycarbonatfilter, goldbeschichtete Siliziumfilter oder Polytetrafluorethylen-Filter (PTFE-Filter) verwendet werden, die Partikel sind typischerweise Mikroplastikpartikel. Der Partikeldurchmesser kann in typischen Anwendungsfällen 10 µm bis 70 µm betragen, wobei auch noch geringere oder noch größere Partikeldurchmesser eingesetzt werden können.

Das anorganische Haftmittel ist eine wasserfest aushärtende Silikatlösung, vorzugsweise Kaliumsilikatlösung, mit einer Konzentration von 30 Prozent, vorzugsweise 10 Prozent. In weiteren Ausführungsbeispielen kann aber auch Lithiumsilikatlösung oder Natriumsilikatlösung verwendet werden. Einzelheiten zu diesem Verfahren und dessen Anwendung werden im Folgenden noch ausführlicher beschrieben.

Die Probenvorbereitung erfolgt in Produktschutzwerkbänken. Arbeitsschritte, die die Handhabung trockener Partikelpulver wie Mahlen, Mischen oder die Zugabe von Pulvern zu Suspensionsmedien beinhalten, werden jedoch außerhalb der Produktschutzwerkbänke durchgeführt, um eine Kontamination am Arbeitsplatz zu vermeiden. Die Verwendung von Kunststoffprodukten wird vermieden und, wo immer möglich, durch Glas oder Metall ersetzt. Jedes Werkzeug wird vor Gebrauch mikroplastikfrei gereinigt, um Kontaminationen zu vermeiden.

Zur Herstellung der Suspensionen können zuvor kryogemahlene umweltrelevante Polymere verwendet werden, beispielsweise Polyethylen niedriger Dichte (LDPE), Polyamid 12 (PA12), Polyethylenterephthalat (PET), Polypropylen (PP) und Polystyrol (PS).

In einem Ausführungsbeispiel können kryogemahlene und gesiebte unregelmäßige Partikel (Nenngröße: 10 - 71 µm) aus den gleichen Polymeren wie zuvor beschrieben verwendet werden und entsprechend verarbeitet werden. Zur Immobilisierung wird dann eine technische Kaliumsilikatlösung (K₂SiO₃ n H₂O, auch bekannt als "Wasserglas", 1,25 g cm⁻¹) als anorganisches Haftmittel verwendet. Basierend auf Vorversuchen mit wässrigen Verdünnungen der Stamm-Kaliumsilikatlösung von 10 %, 20 % und 30 % (v/v) zeigte sich, dass 10 % den besten Kompromiss zwischen Filtrierbarkeit, Immobilisierungsfähigkeit und Schichtdicke boten. Höhere Konzentrationen führten zu erhöhten Haftmittelresten auf den immobilisierten Partikeln, was insbesondere FTIR-Transmissionsmessungen beeinträchtigten kann.

Eine Haftmittelursprungslösung wird durch Mischen von 10 ml Kaliumsilikatlösung mit 90 ml mikroplastikfreiem Wasser bei Raumtemperatur in einem Erlenmeyerkolben mit Glasstopfen hergestellt. Die Lösung wird dann durch 1-µm-Siliziumfilter gefiltert. Das Filtrat wird anschließend als mikroplastikfreie Suspension und als Haftmedium verwendet. Eine Gesamtmasse von 1,52 mg einer Pulvermischung aus etwa gleichen Volumenteilen der Polymertypen wird dem vorbereiteten Medium hinzugefügt. Der geschlossene Kolben mit der Suspension wird zur Partikeldispersion einem Ultraschallbad (10 Min., USC600TH, VWR, 45 kHz, 120 W) ausgesetzt und dann zur Homogenisierung auf einen exzentrischen Hochfrequenzschüttler gehalten, während mit 1-ml-Pasteur-Glaspipetten Volumina zur Filtration extrahiert wird.

Ein poröser Siliziumwafer mit einer Porengröße von 1 µm oder 10 µm wird in eine vorgereinigte Filtervorrichtung eingelegt, die an eine regelbare Vakuumpumpe mit einer PTFE-Scheibe zur Abdichtung angeschlossen ist.

Die Filtration erfolgt bei ca. 100 mbar. Nach der Aushärtung in einem Vakuumtrockenschrank (40 °C, 100 mbar, 12 h) werden die Filter mit fließendem mikroplastikfreiem Wasser und Druckluft gespült, um lose Partikel zu entfernen. Dieser Spülvorgang wird dreimal wiederholt. Nach jedem Spülgang werden Dunkelfeldmikroskopie-Aufnahmen gemacht, um die Entfernung losen Materials zu beurteilen. Der Vorgang gilt als abgeschlossen, wenn zwischen den Aufnahmen nach dem zweiten und dritten Spülgang keine wesentlichen weiteren Veränderungen der Partikelmenge mehr manuell festgestellt werden können.

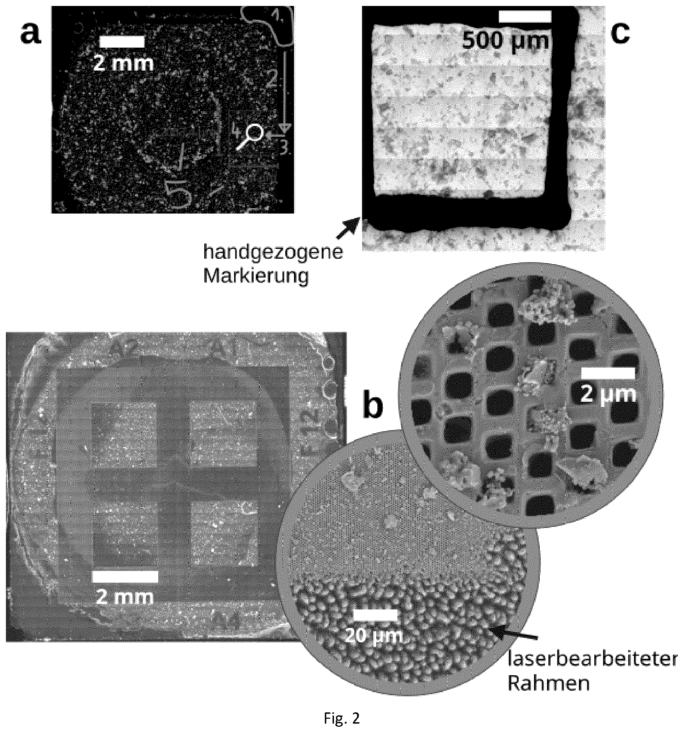

Figur 2 zeigt verschiedene Ansätze, um einen Zielbereich auf dem Substrat zu bestimmen. Drei Ansätze zur Markierung der spezifischen Zielbereiche werden untersucht: 1. Koordinatendefinition, 2. Lasergravur und 3. Farbmarkierung.

Es können verschiedene Verfahren genutzt werden, um den Zielbereich auf dem Filtersubstrat zu definieren (Figur 2, a-c). Die im Sinne der Erfindung angewandte Technik erzeugt mikroskopisch wie makroskopisch freistehende Messflächen mittels Lasergravur (Figur 2, b). Einschübe zeigen Rasterelektronenmikroskopie-Aufnahmen (SEM-Bilder) der Bereichsgrenzen und der quadratischen 1-µm-Poren. Durch den Gravurprozess wird ein Raster aus vier unabhängigen Messbereichen (jeweils 2 x 2 mm) erzeugt, die durch einen Rahmen getrennt waren. Dort hatte der Laser die oberste Schicht einschließlich der Partikel, des Klebstoffs und ca. 3 µm des Si-Filtermaterials entfernt. Bild a) in Figur 2 zeigt ein Dunkelfeldbild eines Substrats mit visuellen Leitlinien, die den Teilnehmern zur manuellen Zielerfassung bereitgestellt werden. Bild c) schließlich zeigt eine Hellfeldübersicht einer Al₂O₃-Membranprobe mit dem durch eine schwarze Markierung markierten Zielbereich.

Der beschriebene Immobilisierung-durch-Filtration-Ansatz liefert eine Probe mit irreversibel an der Oberfläche des Trägers bzw. Substrats haftenden Partikeln. Zudem wird eine annährend homogene Partikelbelegung erreicht. Eine Partikelagglomeration wird im Gegensatz zu anderen Verfahren wie Aufstreuen damit verhindert. Diese kann von allen Teilnehmern eines Ringversuchs (interlaboratory comparison, ILC) nacheinander gemessen werden, wobei jedes Labor denselben Filter misst und ihn an den nächsten Teilnehmer im ILC-Konsortium weiterleitet, wodurch sich eine serielle Vermessung der hergestellten Probe ergibt.

Die entsprechend unserer Beschreibung erstellten Präparate halten wiederholter Messung durch Teilnehmer und dazwischen liegenden Transporten durch Paketversand stand, wie durch Kontrollmessungen nach Rückkehr der Präparate zum ersten Teilnehmer gezeigt werden konnte. Für den Transport können geeignete Halterung wie CNC-gefräste Spannbacken aus blauen PTFE genutzt werden, die durch Zusammenstecken den Filter einspannen und umschließen ohne dabei die Messflächen zu berühren.

In der hier dargestellten Variante eines ILCs werden die unerwünschten Fehlerquellen eliminiert, die durch die multiplikative Stichprobenerstellung im parallelen Designansatz entstehen. Daher stellt die beobachtete Varianz der Ergebnisse das tatsächliche Ausmaß des analytischen Fehlers bei den Teilnehmern genauer dar.

Die Ergebnisse zeigen, dass das serielle ILC-Design durch die Isolierung reiner Analysefehler die beobachtete Variation zwischen den Teilnehmern im Vergleich zum parallelen ILC deutlich reduziert und eine um 77 % geringere relative Standardabweichung (RSD) aufweist. Die mit dem seriellen ILC-Ansatz erzielten Fortschritte tragen nicht nur zur Verbesserung der Präzision von MP-Analysen bei, sondern haben auch weitreichende Auswirkungen auf die Standardisierung der Partikelforschung. Durch diesen seriellen Ansatz mit auf dem Messsubstrat immobilisierten Partikeln werden produktions- und vorbereitungsbedingte Fehler konzeptbedingt ausgeschlossen, da jeder Teilnehmer die gleiche Probe misst. Somit kann der reine analytische Fehler unabhängig untersucht werden. Hierzu werden speziell Siliziumwafer mit einer Porengröße von 10 µm und 1 µm untersucht, wobei das Substrat mit einer Porengröße von 10 µm einen besseren Vergleich von Messresultaten unterschiedlicher Messtechniken ermöglicht, beispielsweise Raman-Spektroskopie und Fourier-Transform-Infrarotspektroskopie (FTIR).

Für eine dauerhaft immobilisierte serielle ILC-Probe werden drei Eigenschaften als besonders wünschenswert angesehen:
1. Substrat und Immobilisierung müssen ausreichend robust sein, um wiederholter Handhabung, Transport und Messung standzuhalten.
2. Die physikalischen Eigenschaften beeinträchtigen oder diskriminieren bestimmte Messtechniken nicht, z. B. ist eine ausreichende Transparenz für infrarote Strahlung gewährleistet.
3. Die Probe ermöglicht eine Rückführung in den ursprünglichen Zustand, z. B. durch Abspülen anhaftender kontaminierender Partikel vor der Messung jedes Teilnehmers.

Im Vergleich zur Herstellung zahlreicher Proben für parallele ILCs erfordert der Ansatz mit immobilisierten Partikeln eine weniger strenge Kontaminationskontrolle während der Produktion. Verunreinigungen während der Probenherstellung sind konstruktionsbedingt ausgeschlossen, da alles, was immobilisiert wird, Teil der Probe wird. Es ist dennoch ratsam, die Proben unter angemessenen analytischen Laborbedingungen vorzubereiten, um unbeabsichtigt eingeführte Partikel zu vermeiden, die zu falschen Ergebnissen führen.

## Patentansprüche

1. Verfahren zum Immobilisieren von Partikeln auf einem als Filter dienendem Substrat während einer Filtration, bei dem das Substrat von einem die Partikel und ein anorganisches Haftmittel enthaltenden Fluid durchströmt wird (S100), wobei das Haftmittel auf das Substrat aufgebracht wird und die Partikel auf dem mit dem Haftmittel versehenen Substrat durch das Haftmittel immobilisiert werden (S101).

2. Verfahren nach Anspruch 1, **dadurch gekennzeichnet, dass** die Partikel als Mikroplastikpartikel oder als andere mikropartikuläre Feststoffe ausgebildet sind.

3. Verfahren nach Anspruch 2, **dadurch gekennzeichnet, dass** die Partikel einen Durchmesser von maximal 100 µm, vorzugsweise von 1 µm bis maximal 100 µm, besonders vorzugsweise von 10 µm bis maximal 70 µm aufweisen.

4. Verfahren nach einem der vorhergehenden Ansprüche, **dadurch gekennzeichnet, dass** das Substrat ein für Mikroskopie und Spektroskopie geeignetes Substrat ist.

5. Verfahren nach einem der vorgehergehenden Ansprüche, **dadurch gekennzeichnet, dass** das Substrat als ein Siliziumwafer mit definierten Löchern ausgebildet ist.

6. Verfahren nach Anspruch 5, **dadurch gekennzeichnet, dass** der Siliziumwafer mit einer Porengröße von maximal 20 µm, vorzugsweise maximal 10 µm ausgebildet ist.

7. Verfahren nach einem der vorhergehenden Ansprüche, **dadurch gekennzeichnet, dass** das Haftmittel Natriumsilikatlösung, Lithiumsilikatlösung oder Kaliumsilikatlösung ist.

8. Verfahren nach Anspruch 7, **dadurch gekennzeichnet, dass** eine Konzentration der Natriumsilikatlösung, der Lithiumsilikatlösung oder der Kaliumsilikatlösung 1 Prozent bis 30 Prozent, vorzugsweise 10 Prozent, beträgt.

9. Verwendung eines Substrats, das mit einem Verfahren nach einem der Ansprüche 1 bis 8 mit immobilisierten Partikeln versehen ist, als Referenzprobe zum Ermitteln einer Leistungsfähigkeit eines oder mehrere spektroskopischer Mikroskope oder Fluoreszenzmikroskope, als Referenzfilter für die spektroskopischen Mikroskope oder Fluoreszenzmikroskope und/oder als Referenzprobe zum Durchführen eines Ringversuchs.

10. Verwendung nach Anspruch 9, **dadurch gekennzeichnet, dass** mindestens eine Markierung oder eine markierte Fläche durch Lasergravur auf das Substrat eingebracht wird, um einen Zielbereich zum spektroskopischen Vermessen zu kennzeichnen.

11. Filter mit einem mit einem Verfahren nach einem der Ansprüche 1 bis 9 beschichteten Substrat mit darin eingebetteten Partikeln.
